# EUROPEAN PATENT SPECIFICATION

(11) **EP 0 696 164 B1**
(45) Date of publication and mention of the grant of the patent: **02.01.1997**
(21) Application number: 94917814.9
(22) Date of filing: 26.05.1994
(51) Int. Cl.: A01K 7/06

(54) **DRINKING NIPPLE FOR BULLS**
TRÄNKEVENTIL FÜR BULLEN
MANCHON PERMETTANT AUX TAUREAUX DE BOIRE

(30) Priority: 17.06.1993 NL 9301062
(43) Date of publication of application: 14.02.1996
(73) Proprietor: Ebbers, Lambertus Wilhelmus, NL-7008 AH Doetinchem (NL)
(72) Inventor: Ebbers, Lambertus Wilhelmus, NL-7008 AH Doetinchem (NL)
(86) International application number: NL9400118
(87) International publication number: WO9500010

(56) References cited:
- DE-A- 1 550 070
- FR-A- 2 123 327
- FR-A- 2 291 699
- FR-A- 2 498 418

## Description

The invention relates to an automatic drinking device for animals which device is connected to the water mains in the cattle shed and, if there is sufficient mains pressure and the device is properly connected, makes it possible to provide for the drinking water requirements of the animals.

The invention is intended mainly for bulls and young stock. Drinking nipples in general ensure that the cattle can drink virtually unlimited quantities of water in such a way that spillage is minimized.

Various types of dranking nipples are currently known, all of them having the disadvantage that when the bite part becomes soiled the shutoff system does not work, or works only partially. In practice, it is found that soiling arises through the cattle using the drinking nipple while they still have feed residues in their mouths.

In most existing models the compression spring in the shutt-off part provides in addition to the pressure for the shutting-off for the O-position of the bite part. By O-position we mean the position in which no action is taken by the animal, and the drinking nipple, if functioning normally, automatically shuts off the water jet.

Leakage occurs because the nipples are inadequately flushed, and feed residues can adhere on and in the high-precision moving parts.

In certain models the tails of the animals in question can also become caught around the bite button, causing not only injury, but also leakage, because hair residues etc. are left behind in and on the high-precision bite part. The animal can also injure its mouth, due to the fact that during drinking there are too many poorly shaped moving parts in the animal's mouth.

Another factor is that the existing models are not easy to adjust as regards the water delivery. When the adjustment is too laborious, this means that a long stay with the animals in the shed is necessary. When the animals have grown larger, this could lead to life-threatening situations for the livestock farmer.

It has also been found in practice that if the spring breaks there is a water problem, because the passage of the nipple in question automatically goes to maximum through the water pressure. An alternative would be the nipple described in FR-A-2498418 but this nipple is inadequatly flushed and because the moving parts are exposed and unprotected the nipple is easily soiled, the complex design makes it disproportionally expensive and because the adjusting bolt is situated inside the suction pipe it is difficult to adjust, so although it can overcome some, it cannot overcome all of the existing disadvantages.

The object of the invention is to provide a drinking nipple which does not have the above mentioned disadvantages and can also be produced relatively cheaply through a simpler design.
The invention aims at solving the abovementioned problems as follows: each time an animal drinks, the bite part is automatically flushed with clean drinking water, which flows through the hole (6) ⌀11 and the inside of the suction pipe.

The bite plate is also designed in such a way that it closes around the moving parts as a protective cap, so that it is difficult for soiling to occur at the most susceptible place.

Since this nipple is flushed out from the inside directly during drinking, the chance of dirt adhering is extremely small.

The nipple of the invention can be adjusted by means of an adjusting bolt which is secured against rotation by means of an O-ring fitted around the adjusting bolt and fitting tightly into a holder.

The adjusting bolt is placed in such a way that it is always readily accessible, which makes it considerably simpler to adjust.

Since the nipple construction is get up in such a way that the bite part and the shutt-off part operate independently of each other, and the bite plate is designed to be so light and have few moving parts, together with the direction of the mains pressure this produces a permanent seal, even if the spring breaks.

Even if the compression spring (7) breaks, the nipple still shuts off normally, due to the low weigth of the bite plate and the positioning of the centre of rotation far forward.

The compression spring (7) is also placed in such a way that it can be replaced without tools and without removal of the nipple.

Since the nipple of the invention has a bite plate which is adapted to the shape of the animal's mouth, and which matches the round shape of the animal's palate, and the design is such that there are few moving parts in the animal's mouth, the risk of injury is very low.

The way in which the invention works will be explained in greater detail with reference to the exemplary embodiment below.

The bite plate (2), which is hingedly fixed to suction pipe (1) and is set in motion by the mouth of the animal, by means of adjusting bolt (3) presses down pressure piece (4), which forms a rigid connection with valve (5), which is lifted in this way off thee seat and produces a flow opening for the drinking water.

This produces a water flow which, under the influance of pressure piece (4), flows against the inside of suction pipe (1), and also finds hole (6), where a 2nd flow then passes through the inside of the bite plate and the outside of the suction pipe, and into the animal's mouth.

The water delivery can be infinitely varied by the livestock farmer, by turning adjusting bolt (3) clockwise or anticlockwise.

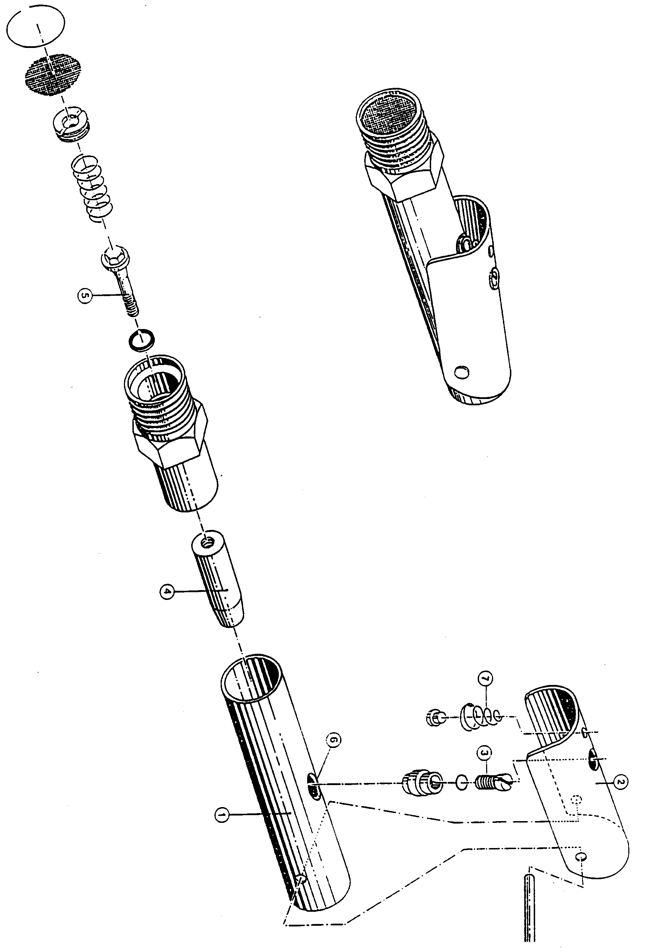

## Claims

1. Drinking nipple for animals, consisting of a suction pipe (1) housing a valve assembly (4,5) with a valve (5), a valve seat and a pressure piece (4), whereby a pressure plate (2) is mounted on the suction pipe (1), which pressure plate (2) can press said pressure piece (4) down by means of an adjusting bolt (3), as a result of which said valve (5) is lifted off its seat and a passage is produced for the drinking water **characterized in that** the pressure plate (2) is hingedly mounted around the suction pipe (1) such that it closes around the moving parts as a protective cap, that the adjusting bolt (3), which is mounted to the pressure plate (2), protrudes through a hole (6) in the suction pipe (1) to provide for pressing down said pressure piece (4), that the pressure piece (4) is placed in such a way that the released drinking water flows not only along the inside of suction pipe (1), but also through said hole (6), with the result that the drinking nipple is flushed out from the inside during drinking and the adhesion of dirt and thereby breakdown of the nipple is prevented and hygiene is promoted, and in that the drinking nipple is formed in such a way that no injuries occur to the animal's mouth, while said drinking nipple is still simple to produce.

2. Drinking nipple according to Claim 1, characterized in that the water delivery is infinitely variable by means of the said adjusting bolt (3) which is mounted to the pressure plate (2) and is secured against accidental turning by means of an O-ring around said adjusting bolt, said adjusting bolt providing for pressing down pressure piece (4) to a greater or lesser extent, and thus for more or less water being delivered.

## Patentansprüche

1. Trink-Nuckel für Tiere, der aus einer Saugröhre (1) besteht, die ein Ventilteil (4, 5) mit einem Ventil (5), einer Ventilsetzung und einem Druckteil (4) enthalt, wobei eine Druckplatte (2) auf eine Saugrohre (1) montiert wurde, diese Druckplatte (2) kann das erwähnte Druckteil (4) nach unten drucken mittels einer Stellschraube (3), wodurch das erwähnte Ventil (5) von der Stelle gehoben wird und eine Durchflussöffnung für das Trinkwasser entsteht, dabei liegt die Besonderheit darin, dass die Druckplatte (2) derartig um eine Saugröhre (1) scharnierend befestigt ist, dass sie sich bewegenden Teile wie durch eine Schutzkappe umschlossen werden, dass die Stellschraube (3), die in der Druckplatte (2) durch ein Loch (6) der Saugröhre steckt, es ermöglicht, das erwähnte Druckteil (4) nach unten zu drucken, und dass das Druckteil (4) derartig angebracht ist, dass das abgegebene Trinkwasser nicht nur entlang der Innenseite der Saugröhre (1) strömt, sondern auch durch das erwähnte Loch (6), hierdurch wird während des Trinkens der Trink-Nuckel von innen durchgespült und ein Schmutzanschlag und somit eine Störung verhindert, was der Hygiene förderlich ist, dabei ist der Trink-Nuckel derartig geformt dass keine Verwundungen am Tiermaul auftreten können, während der erwähnte Trink-Nuckel doch einfach herzustellen ist.

2. Trink-Nuckel gemäss Patentanspruch 1, wobei die besonderheit darin liegt, dass die Wasserabgabe stufenlos verstellbar ist mittels des genannten Stelbolzens (3), der in der Druckplatte (2) montiert ist und gegen unerwünschtes Drehen mittels eines o-Ringes um den erwähnten Stellbolzen gesichert wird, der genannte Stellbolzen sorgt für das mehr oder weniger Eindrüken des Druckteiles (4) und somit für mehr oder weniger Wasserabgabe.

## Revendications

1. Mamelon d'abreuvement pour animaux, se composant d'un tuyau d'aspiration (1) comprenant un élément à valve (4, 5) équipée d'une valve (5), un fond de valve et un élément de pression (4) où une plaque de pression (2) est montée sur le tuyeau d'aspiration (1), laquelle plaque (2) sert à enfoncer l'élément de pression (4) au moyen d'une vis de réglage (3) moyennant quoi la valve (5) précitée se détache de son fond en permettant à l'eau potable de couler par une ouverture ayant pour caractéristique que la plaque de pression (2) est fixée en pivot autour du mamelon (1) de façon à entourer les parties mobiles comme une plaque de protestion, que la vis de réglage (3) qui est montée dans la plaque de pression (2) sort du tuyau d'aspiration (1) à travers un trou (6) afin de permettre le mouvement vers le bas de l'élément de pression (4) précitée, que l'élément de pression est positionée de façon à faire couler l'eau potable libérée non seulement le long des parois intérieures du mamelon d'abreuvement (1), mais également par le trou (6) précité, ce qui permet de rincer de l'intérieur le mamelon d'abreuvement au cours de l' abreuvement en prévenant ainsi que des impurités s'attachent et résultant en une prévention de dèrangements et une hygiène accrue et où le mamelon d'abreuvement est décliné de facon à éviter les blessures au niveau du bec du bovin alors que le mode de fabrication du mamelon d'abreuvement est simple.

2. Mamelon d'abreuvement conforme à la revendication no. 1 se caractérisant par le fait que la quantité d'eau libérée est inliniment réglable au moyen de la vis (3) précitée qui est montée dans la plaque de pression (2) et qui bloque les mouvements involontaires au moyen d'un anneau en forme de o autour de la vis de réglage (3) précitée et cette vis de réglage précitée encleche une pression plus ou moins poussée de la plaque de pression (4) en réglant ainsi le debit de l'eau libérée
